# EUROPÄISCHE PATENTSCHRIFT

(11) **EP 0 462 155 B1**
(45) Veröffentlichungstag und Bekanntmachung des Hinweises auf die Patenterteilung: **21.07.1993**
(21) Anmeldenummer: 90904299.6
(22) Anmeldetag: 23.02.1990
(51) Int. Cl.: A61C 19/00

(54) **DRUCKLUFT- UND UNTERDRUCK-VERSORGUNGSEINHEIT**
UNIT FOR PROVIDING COMPRESSED AIR AND UNDERPRESSURE
GROUPE D'ALIMENTATION D'AIR COMPRIME ET DE VIDE

(30) Priorität: 09.03.1989 DE 3907592
(43) Veröffentlichungstag der Anmeldung: 27.12.1991
(73) Patentinhaber: Dürr-Dental GmbH & Co. KG, D-74321 Bietigheim-Bissingen (DE)
(72) Erfinder: MEYER, Günter, D-7120 Bietigheim-Bissingen (DE); NAFZGER, Siegfried, D-7141 Steinheim 3 (DE); BOSER, Reiner, D-7500 Karlsruhe (DE)
(74) Vertreter: Ostertag, Reinhard
(86) Internationale Anmeldenummer: EP9000310
(87) Internationale Veröffentlichungsnummer: WO9010422

(56) Entgegenhaltungen:
- US-A- 3 404 458
- US-A- 3 553 840
- US-A- 4 160 323

## Beschreibung

Die Erfindung betrifft eine Druckluft- und Unterdruck-Versorgungseinheit für dentale Arbeitsplätze gemäß dem Oberbegriff des Anspruches 1.

Eine derartige Versorgungseinheit ist in der US-A-3 553 840 beschrieben. Bei ihr sind Verdichter und Saugmaschine auf einer gemeinsamen Bodenplatte eines fahrbaren Gehäuses angeordnet. Letzteres trägt zugleich auch die Druckluft- und Unterdruck-Verbraucher, nämlich einen Speichelheber und ein druckluftabgebendes Handstück. Diese Versorgungseinheit stellt ein abgesehen vom Netzanschluß autarkes Not- Versorgungs- und Entsorgungsgerät für einen zahnärztlichen Arbeitsplatz dar. Verbindungen zu gebäudefesten Leitungen sind nicht vorhanden.

Eine ähnliche Versorgungseinheit ist Gegenstand der US-A-3 404 458.

Derartige autarke Einheiten haben jedoch bezüglich der Druckluftversorgung und der Unterdruckversorgung nur begrenzte Kapazität. Außerdem erzeugen sowohl der Verdichter als auch die Saugmaschine Geräusche, die an einem dauernd benutzten zahnärztlichen Arbeitsplatz unerwünscht sind.

Für die Druckluftversorgung und Unterdruckversorgung von dentalen Arbeitsplätzen in Zahnarztpraxen, Zahnkliniken und im Zahnlabor werden daher üblicherweise ein Verdichter und eine Saugmaschine im Keller des Gebäudes getrennt aufgestellt und über eine Druckluftleitung bzw. eine Unterdruckleitung mit dem Arbeitsplatz verbunden. Diese Installationen werden oft von lokalen Handwerkern hergestellt, die keine speziellen Erfahrungen auf dem Gebiet derartiger Installationen haben. So werden z.B. häufig flexible Teile der Unterdruckleitung falsch verlegt, so daß sie im Betrieb unter Unterdruck teilweise zusammenfallen, wodurch am Arbeitsplatz nur ein Teil der von der Saugmaschine bereitgestellten Leistung zur Verfügung steht.

Durch die vorliegende Erfindung soll daher eine derartige Versorgungseinheit geschaffen werden, die schon in der Fabrik weitgehend montiert werden kann, so daß am Installationsort nur eine geringe Anzahl unkritischer Anschlüsse herzustellen ist, was auch ein nicht speziell für derartige Installationen ausgebildeter Fachmann erledigen kann, und daß sie sich besonders einfach und leicht versenden läßt und die Lagerhaltung vereinfacht ist.

Diese Aufgabe ist erfindungsgemäß gelöst durch eine Versorgungseinheit gemäß Anspruch 1.

Bei der erfindungsgemäßen Versorgungseinheit ist die räumliche Zuordnung der verschiedenen Teilaggregate schon von der Fabrik her vorgegeben. Diese Teilaggregate können auch weitgehend schon strömungsmäßig und elektrisch "verkabelt" sein. Insbesondere die kritischen Anschlüsse unmittelbar am Verdichter bzw. der Saugmaschine sind schon in der Fabrik fertiggestellt. Am Einsatzort braucht nur noch der Anschluß zu den gebäudefesten Versorgungsleitungen und zum elektrischen Netz hergestellt werden. Die einzelnen Elemente mit den von ihnen getragenen Maschinen lassen sich noch leicht von zwei Monteuren von Hand tragen und umsetzen. Man kann aus Elementen mit unterschiedlicher Maschinenbestückung auch leicht die für den jeweiligen Anwendungsfall notwendige Kombination zusammensetzen. Nach dem Übereinanderstellen der Elemente müssen nur noch einige interne Leitungen gezogen werden, es handelt sich hierbei aber um unkritische geradlinige Verbindungsstücke.

Im Ergebnis kommt eine erfindungsgemäße Versorgungseinheit nicht teurer als eine herkömmliche Installation, da an den Montagearbeiten vor Ort leicht die Kosten für das in der Fabrik serienmäßig hergestellte preisgünstige Gestell eingespart werden, welches den Verdichter und die Saugmaschine trägt.

Dabei wird durch die erfindungsgemäße Lösung zusätzlich der Vorteil erhalten, daß die Aufstellfläche insgesamt kleiner ist. Dies ist insbesondere für solche Anwendungen von Vorteil, wo kein geräumiger Kellerplatz zur Verfügung steht. Auch die Wartung und Reparatur der bei der erfindungsgemäßen Lösung sauber und klar angeordneten Maschinen läßt sich leichter und einfacher durchführen, da der Monteur überall die gleichen Verhältnisse vorfindet, nicht zunächst Einzelheiten der jeweiligen lokalen Installation erforschen muß.

Vorteilhafte Weiterbildungen der Erfindung sind in Unteransprüchen angegeben.

Bei einer Versorgungseinheit gemäß Anspruch 2 kann man bei unverändert kleiner Abstellfläche zusätzlich noch einen Druckluftspeicher und/oder eine Trockenlufteinheit unterbringen. Auch diese Versorgungseinheit läßt sich sehr einfach vor Ort aufstellen.

Die Weiterbildung der Erfindung gemäß Anspruch 3 ist im Hinblick auf eine einfache Herstellung des die Maschine tragenden Gestelles aus weitgehend gleichen Bestandteilen und im Hinblick auf eine glatte Außenkontur des Gestelles von Vorteil.

Die Weiterbildung der Erfindung gemäß Anspruch 4 ist im Hinblick auf geringe Herstellungskosten und im Hinblick auf ein ansprechendes Äußeres der vertikalen Ständer ohne Nachbearbeitung von Vorteil.

Eine Versorgungseinheit gemäß Anspruch 5 hat keine scharfen Kanten und ein ansprechendes Äußeres.

Mit der Weiterbildung der Erfindung gemäß Anspruch 6 wird auf sehr einfache Weise eine Schalldämmung der Versorgungseinheit erzielt. Dies ermöglicht es, die auch äußerlich ansprechende Versorgungseinheit in einem Praxisraum oder Laborraum aufzustellen, wenn kein Kellerraum oder Nebenraum zur Verfügung steht.

Die Weiterbildung der Erfindung gemäß Anspruch 7 ermöglicht es, die Verkleidungselemente oder Halteplatten für elektronische oder fluidische Einschübe auf sehr einfache Weise an beliebiger Stelle des Gestelles festzulegen.

Die Weiterbildung der Erfindung gemäß Anspruch 8 ist im Hinblick auf eine besonders einfache Anbringung der seitlichen Verkleidungselemente am Gestell von Vorteil.

Bei einer Versorgungseinheit gemäß Anspruch 9 kann man an den hinteren, dem Inneren des Gestelles zugewandten Abschnitten der Profilteile nochmals auf sehr einfache Weise zusätzliche Befestigungen für elektrische oder Fluid-Zusatzgeräte anbringen.

Die Weiterbildung der Erfindung gemäß Anspruch 10 ist im Hinblick auf ein besonders einfaches Verbinden von Bodenplatten und vertikalen Ständern von Vorteil.

Die Weiterbildung der Erfindung gemäß Anspruch 11 dient einer besonders scherfesten Verbindung zwischen Profilteilen und Bodenplatten.

Bei einer Versorgungseinheit gemäß Anspruch 12 kann man Fluid-Leitungen und elektrische Leitungen sauber und unter großem Abstand von den wärmeerzeugenden Maschinen am Gestell verlegen.

Die Weiterbildung der Erfindung gemäß Anspruch 13 ist im Hinblick auf gute übersichtlichkeit der internen Installationen von Vorteil.

Die Weiterbildung der Erfindung gemäß Anspruch 14 ist im Hinblick auf eine kostengünstige Herstellung des Gestelles der Versorgungseinheit von Vorteil. Die umgekanteten Seitenwände verleihen den Bodenplatten und Deckenplatten auch erhöhte Stabilität.

Mit der Weiterbildung der Erfindung gemäß Anspruch 15 wird auf einfache Weise eine zwangsmäßige Ausfluchtung übereinanderliegender Elemente der Versorgungseinheit gewährleistet.

Bei einer Versorgungseinheit gemäß Anspruch 16 hat man auf der Unterseite einer Bodenplatte zwei unter Abstand parallel zueinander verlaufende gleich hohe Schienen, auf denen ein Element auf der Deckenplatte des darunterliegenden Elementes leicht so lange verschoben werden kann, bis die Materialplatten der Bodenplatte des oberen Elementes in die Durchgangsöffnungen in der Deckenplatte des unteren Elementes eingreifen, wodurch dann die Elemente aufeinander ausgefluchtet sind.

Bei einer Versorgungseinheit gemäß Anspruch 17 kann man weitere Strömungsmittelleitungen und elektrische Leitungen im Randbereich des Gestelles von einer Etage zur anderen Etage verlegen.

Bei einer Versorgungseinheit gemäß Anspruch 18 kann man den Speicherbehälter auf sehr einfache Weise warten und testen; dieser kann einfach aus dem Inneren des Gestelles nach außen herausgeschwenkt werden, z.B. für die periodisch durchzuführende Drucksicherheitsprüfung.

Bei einer Versorgungseinheit gemäß Anspruch 19 kann man den Speicherbehälter nach dem Herausschwenken aus dem Gestell auch auf sehr einfache Weise ganz vom Gestell abnehmen.

Bei der erfindungsgemäßen Versorgungseinheit hat man fluchtende Durchgangsöffnungen in den verschiedenen Bodenplatten und Deckenplatten, die nicht nur zum Verlegen von Strömungsmittelleitungen dienen, sondern zugleich auch einen Lüftungskamin vorgeben, wenn die Gestellseiten mit Verkleidungselementen verschlossen sind. Ist die Überseite des Gestelles ebenfalls durch eine Deckenplatte verschlossen, so kann man die Wärmeabfuhr von den verschiedenen übereinander angeordneten Maschinen gemäß Anspruch 20 auf sehr einfache Weise unter Zuhilfenahme dieses Lüftungskamines bewerkstelligen.

Mit der Weiterbildung der Erfindung gemäß Anspruch 21 wird ein temperaturgesteuertes Arbeiten des Lüftungs-Ventilators erhalten.

Die Weiterbildungen der Erfindung gemäß den Ansprüchen 22 und 23 sind im Hinblick auf ein vibrationsfreies Arbeiten und damit im Hinblick auf geringe Geräuschentwicklung der Versorgungseinheit von Vorteil.

Nachstehend wird die Erfindung anhand von Ausführungsbeispielen unter Bezugnahme auf die Zeichnung näher erläutert. In dieser zeigen:
- Figur 1:: eine Aufsicht auf die Stirnseite eines Druckluft- und Unterdruck-Versorgungsschrankes für einen dentalen Arbeitsplatz, der aus drei übereinandergestellten Elementen besteht;
- Figur 2:: eine Aufsicht auf die Stirnseite des Versorgungsschrankes nach Figur 1 nach Abnahme von stirnseitigen Verkleidungsplatten;
- Figur 3:: eine vergrößerte Aufsicht auf ein Profilteil, welches als vertikaler Ständer in den Schrankelementen des Versorgungsschrankes nach den Figuren 1 und 2 verwendet wird;
- Figur 4:: eine Aufsicht auf die Unterseite einer Bodenplatte der Schrankelemente nach den Figuren 1 und 2 in gegenüber diesen Figuren vergrößertem, gegenüber Figur 3 jedoch verkleinertem Maßstabe;
- Figur 5:: eine Aufsicht auf die Unterseite einer Deckenplatte eines Schankelementes, die zu der Bodenplatte nach Figur 4 paßt;
- Figur 6:: einen Längsschnitt durch die Bodenplatte nach Figur 4 und eine unter dieser liegende Deckenplatte nach Figur 5 eines darunterliegenden Schrankelementes, geschnitten längs der Linie VI-VI von Figur 4 bzw. Figur 5;
- Figur 7:: eine Aufsicht auf ein Blech-Stanzteil, aus welchem sowohl die Bodenplatte nach Figur 4 als auch die Deckenplatte nach Figur 5 hergestellt werden kann;
- Figur 8:: eine Aufsicht auf zwei Ecken des Gerüstes eines Schrankelementes nach Abnahme seiner Deckenplatte;
- Figur 9:: eine ähnliche Ansicht wie Figur 8, wobei in das Gerüst seitliche Verkleidungsplatten eingehängt sind und am Gerüst zusätzlich eine Steuereinheit angebracht ist; und
- Figur 10:: eine ähnliche Ansicht wie Figur 8, wobei Installationsvarianten wiedergegeben sind.

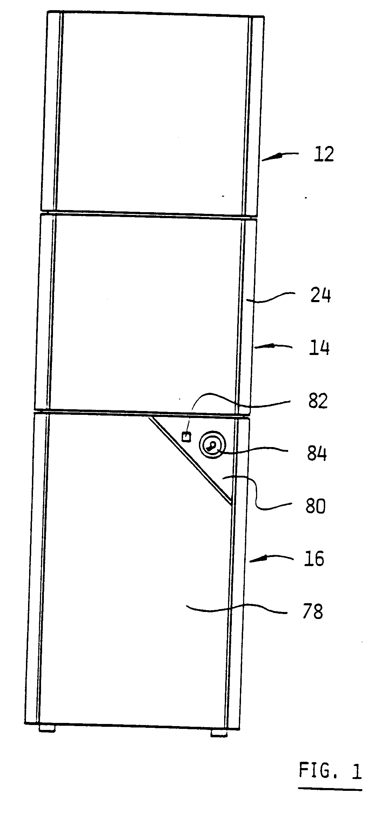

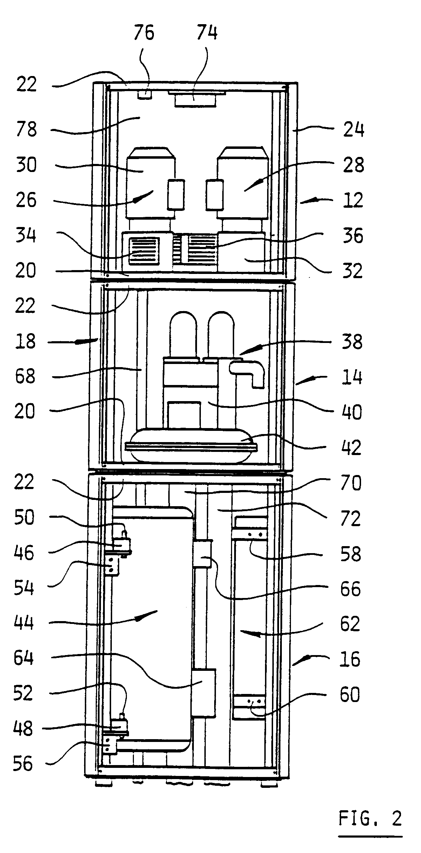

In den Figuren 1 und 2 ist eine schrankförmige Versorgunseinheit für dentale Arbeitsplätze gezeigt, die aus drei übereinandergestellten Versorgungselementen 12, 14 und 16 besteht. Jedes der Versorgungselemente hat ein insgesamt mit 18 bezeichnetes Gerüst, welches aus einer Bodenplatte 20, einer darüberliegenden, gleiche Randkontur aufweisenden Deckenplatte 22 und vier diese Platten verbindenden vertikalen Profilteilen 24 besteht. Die Ausbildung und Verbindung der Bodenplatten, Deckenplatten und Profilteile wird später noch genauer beschrieben.

Die Bodenplatte 20 des obersten Versorgungselementes 16 trägt zwei Kolbenverdichter 26, 28, die jeweils einen Elektromotor 30 und zwei auf ein Kurbelgehäuse 32 aufgesetzte Zylinder 34, 36 in 90°-V-Anordnung aufweisen. Wie aus der Zeichnung ersichtlich, sind die Motorachsen vertikal ausgerichtet und die beiden Kolbenverdichter sind auf der obersten Bodenplatte 20 so angeordnet, daß ihre Zylinder 34, 36 symmetrisch zur Mittelachse des Versorgungselementes 16 liegen.

Das mittlere Versorgungselement 14 trägt auf seiner Bodenplatte 20 eine Saugmaschine 38, die einen Elektromotor 40 und ein an diesen angeflanschtes Gebläse 42 aufweist. Die Achse des Elektromotors 40 ist wiederum vertikal ausgerichtet.

Im untersten Versorgungselement 12 ist ein Druckluft-Speicherbehälter 44 vorgesehen, an welchen Scharnierteile 46, 48 angeschweißt sind, die auf Scharnierbolzen 50, 52 laufen. Letztere sind auf Winkelteilen 54, 56 angebracht, die mit dem linkeren vorderen Profilteil 24 verschraubt sind.

Über Tragringe 58, 60, die am rechten hinteren Profilteil 24 des Versorgungselementes 12 festgeschraubt sind, wird eine zylindrische Trockenlufteinheit 62 gehalten. Diese enthält ein regenerierbares Trocknungsmittel, z.B. Silicagel und ist über in Figur 2 nicht gezeigte Schläuche mit einer Steuereinheit 64 verbunden, die vom Speicherbehälter 44 getragen ist. Die Steuereinheit 64 arbeitet grob gesprochen so, daß sie normalerweise die dem Speicherbehälter 44 zugeführte Druckluft über das Trocknungsmittel führt, aber dann, wenn die behandelte Luft einen über einem vorgegebenen Wert liegenden Feuchtigkeitsgehalt hat, die Trockenlufteinheit 62 im Gegenstrom mit aus dem Speicherbehälter 44 abgezogener und dann entspannter Luft beaufschlagt und die von der Trockenlufteinheit 62 dann zurückgeführte Feuchtigkeit enthaltende Luft an die Atmosphäre abgibt.

Auf dem Speicherbehälter 44 ist ferner ein Druckfühler 66 wiedergegeben, der das Arbeiten der Kolbenverdichter 26, 28 steuert.

Wie aus Figur 2 ersichtlich, erstreckt sich eine Druckluftleitung 68 in vertikaler Richtung von den Kolbenverdichtern 26, 28 und durch die oberste Bodenplatte 20 durch die Deckenplatten und Bodenplatten der darunterliegenden Versorgungselemente 12, 14 und tritt nach unten aus dem Versorgungsschrank aus. Sie ist dort mit einer gebäudefesten Druckluftleitung verschraubt.

Ähnlich erstrecken sich eine Vakuumleitung 70 und eine Abluftleitung 72 vom mittleren Versorgungselement 14 zum Boden des Raumes, in welchem der Versorgungsschrank aufgestellt ist. Dort ist die Vakuumleitung 70 mit einer gebäudefesten Vakuumleitung verbunden, die Abluftleitung 72 mit einer im Gebäude bis über Dach geführten Abluftleitung.

Die Durchbrechungen in den Bodenplatten und Deckenplatten, durch welche die verschiedenen Strömungsleitungen (und die in Figur 2 nicht gezeigten, ebenfalls nach unten gesammelten elektrischen Leitungen) zugeführt sind, bilden zugleich einen Lüftungsschacht, durch welchen die von der Saugmaschine 38 entwickelte Wärme in das oberste Versorgungselement 12 aufsteigen kann. Dessen Deckenplatte 22 trägt einen Ventilator 74, der durch einen daneben liegenden Temperaturfühler 76 gesteuert wird. Auf diese Weise wird Kühlluft vom Ventilator 74 durch die Bodenplatte des untersten Versorgungselementes 12 angesaugt und durch die Versorgungselemente 14 und 16 hindurchgezogen.

Wie aus den Figuren 1 und 2 ersichtlich, sind die Gerüste 18 der Versorgungselemente 12, 14 und 16 rundum mit rechteckigen Verkleidungsplatten 78 glattflächig verschlossen, so daß man zusammen mit einer unter 45° zu den Verkleidungsplatten 78 verlaufenden Sichtfläche der Profilteile 24 ein ansprechendes Äußeres des Versorgungsschrankes erhält.

Die vordere Verkleidungsplatte 78 des untersten Versorgungselementes 16 ist bei ihrem oberen rechten Eck abgeschrägt, und dort ist am Gerüst 18 dieses Versorgungselementes eine dreieckige Verkleidungsplatte 80 fest angebracht, welche einen Hauptschalter 82 und einen Druckmesser 84 trägt.

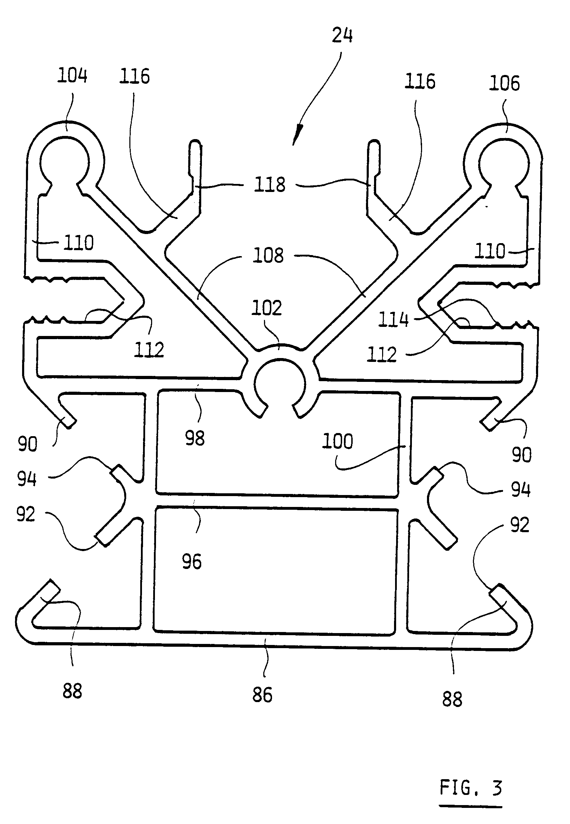

Figur 3 zeigt in verglichen mit Figur 1 stark vergrößertem Maßstabe eine Stirnaufsicht auf ein Profilteil 24. Dieses Profilteil hat eine vordere Sichtwand 86, an welche unter 45° schräg zurückspringende seitliche Anschlagwände 88 angeformt sind. An deren hintere Enden sind hintere Anschlagwände 90 angeformt, die als hintere Abstützung für die Verkleidungsplatten 78 dienen.

Die Anschlagwände 88, 90 haben bei ihrer Mitte Längsschlitze 92, 94 zur Aufnahme von Befestigungselementen.

Die Verbindungsstellen der Anschlagwände 88, 90 sind durch eine parallel zur Sichtwand 86 verlaufende Versteifungswand 96 verbunden, die freien Enden der hinteren Anschlagwände 90 durch eine Versteifungswand 98. Ferner erstrecken sich durch die Verbindungspunkte der Anschlagwände 88, 90 weitere Versteifungswände 100, die senkrecht auf der Sichtwand 86 und der Versteifungswand 98 stehen. Damit erhält man zugleich hinter den Längsschlitzen 92, 94 dreieckigen Querschnitt aufweisende Kanäle, in welche Muttern für Befestigungsschrauben oder ähnliche Gegen-Befestigungsmittel eingesetzt werden können.

In die Versteifungswand 98 ist bei ihrer Mitte ein erster Schraubenkanal 102 angeformt, der sich über einen Winkel von etwa 300° erstreckt. Weitere Schraubenkanäle 104, 106, die sich ebenfalls über etwa 300° erstrecken, sind an den Enden zweier unter +45° bzw. -45° zur Versteifungswand 98 angestellter, diagonaler Versteifungswände 108, vorgesehen. Deren freie Enden sind mit den freien Enden der Anschlagwände 90 über weitere senkrecht zur Versteifungswand 98 verlaufende Versteifungswände 110 verbunden. Diese haben jeweils eine eingeformte in Längsrichtung verlaufende Nut 112 mit in Längsrichtung verlaufenden kleinen Rippen 114, die zum Eindrehen von Befestigungsschrauben dient.

Auf der Rückseite der Versteifungswände 108 sind unter rechtem Winkel von diesen weglaufende Kabelkanalwände 116 vorgesehen, welche einen wieder um 45° zurückgeklappten, also senkrecht auf der Ebene der Versteifungswand 98 stehenden Endabschnitt 118 haben, der wulstähnlich ausgebildet ist und auf welchen eine Kanal-Abdeckleiste aufgerastet werden kann.

Das in Figur 3 gezeigte Profilteil ist in der Praxis durch Ablängen von einem extrudierten Profilteil hergestellt, welches aus Aluminium besteht. Derartige extrudierte Aluminiumprofile lassen sich kostengünstig herstellen. Auf Grund der verschiedenen Versteifungswände hat das in Figur 3 gezeigte Profil bei geringem Gewicht eine hohe Steifigkeit. Es bietet ohne mechanische Nachbearbeitung oder bei nur geringfügiger mechanischer Nachbearbeitung (Bürsten oder dergleichen) eine ansprechende Sichtfläche, stellt seitliche und hintere Anschlagflächen für die Verkleidungselemente zur Verfügung, ermöglicht ein einfaches Zusammenschrauben von Bodenplatten, Deckenplatten und Profilteilen zu einem auch auf Scherung hochbelastbaren Gerüst, begrenzt einen Kabelkanal und bietet darüber hinaus Befestigungsmöglichkeiten für Elektronikeinheiten, Fluid-Einheiten oder andere Zusatzeinheiten, die nicht auf einer Bodenplatte oder einer Deckenplatte angebracht werden sollen, sei es aus Temperaturgründen, sei es im Hinblick auf den Schutz vor Erschütterungen oder Temperatureinflüssen oder sei es im Hinblick auf leichte Zugänglichkeit.

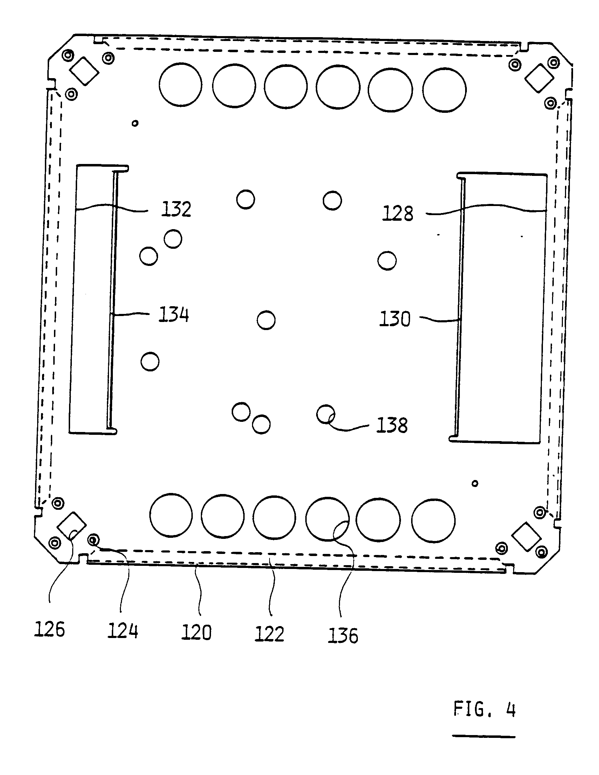

Wie aus Figur 4 ersichtlich, haben die Bodenplatten 24 nach oben umgekantete niedere Seitenwände 120, die ihrerseits einen parallel zur Bodenplatte nach innen zurückspringenden Schenkel 122 aufweisen. Die Seitenwände 120 erstrecken sich nicht in einen Eckbereich, in welchem die Bodenplatten 20 mit den vertikalen Profilteilen 24 verschraubt werden. Hierzu sind in diesem Eckbereich drei angesenkte Bohrungen 124 in gleicher Anordnung vorgesehen wie die Schraubenkanäle 102-106 der Profilteile 24. Im Inneren des durch die Bohrungen 124 vorgegebenen Dreieckes ist jeweils ein rechteckiger Durchbruch 126 vorgesehen, der bei aufgeschraubtem Profilteil mit dessen durch die Kabelkanalwände 116 begrenzten Kabelkanal fluchten.

Die Bodenplatte 20 hat ferner eine in Figur 4 rechts liegende rechteckige Durchbrechung 128, deren eine Längskante sehr nahe bei der in Figur 4 rechts liegenden Seitenwand 120 liegt. Am linken Rand der Durchbrechung 128 ist ein Materiallappen 130 nach unten umgekantet.

Ähnlich ist bei der in Figur 4 links gelegenen Seitenwand 120 eine etwas schmälere rechteckige Durchbrehung 132 vorgesehen, die bei ihrer innenliegenden Kante ebenfalls mit einem nach unten umgekanteten Materiallappen 134 vorgesehen ist. Beide Materiallappen stehen gleich weit über die Unterseite der Bodenplatte 20 vor und bilden Schienen, auf denen die Bodenplatte auf einer darunter liegenden Deckenplatte verschoben werden kann.

Längs der oberen und unteren Seitenwand der Bodenplatte 20 ist eine Mehrzahl kreisförmiger Durchbrechungen 136 vorgesehen, die zum Durchziehen kleinerer Schläuche und Kabel dienen können, während die Durchbrechung 128 zum Durchziehen der Druckluftleitung 68 und der großen Durchmesser aufweisenden Vakuumleitung 70 und Abluftleitung 72 dient. Die Durchbrechung 132 kann auch zum Durchziehen kleinerer Schläuche und Kabel verwendet werden.

Soweit die Durchbrechungen 128, 132 und 136 bei einer speziellen Installation nicht oder nur in einem Teil ihres Querschnittes mit Schläuchen oder Kabeln belegt sind, bilden sie Durchtrittsöffnungen für Kühlluft von einem Versorgungselement zum nächst darüberliegenden. Wie z.B. aus Figur 4 gut ersichtlich hat man so Kühlluftströme bei allen Seiten von Bodenplatten und Deckenplatten, wodurch eine Kühlung der jeweils auf den Bodenplatten angeordneten Aggregaten von allen Seiten her gewährleistet ist. Dabei besorgt der schon angesprochene Ventilator 74 die Zwangsbewegung der Kühlluft.

Verschiedene weitere kleine Durchbrechungen 138 im Hauptteil der Bodenplatte dienen als Befestigungspunkte für die Kolbenverdichter 26, 28 bzw. die Saugmaschine 38 oder andere auf einer Bodenplatte anzubringende Maschinen.

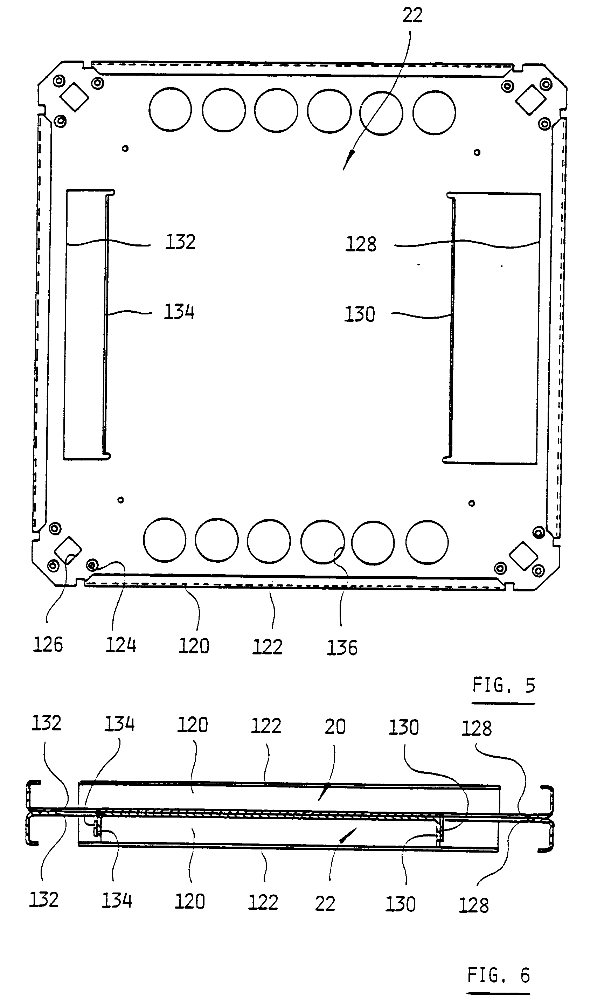

Wie Figur 5 zeigt, hat eine Deckenplatte 22 insgesamt sehr ähnliche Geometrie wie eine Bodenplatte (vergleichbare Plattenteile haben dieselben Bezugszeichen), nur sind die Materiallappen 130, 134 zur gleichen Seite hin umgekantet wie die Seitenwände 120. Außerdem haben die Materiallappn 130, 134 bei einer Deckenplatte 22 etwas geringeren Abstand voneinander als die Materiallappen 130, 134 einer Bodenplatte, so daß die Materiallappen einer Bodenplatte die Materiallappen einer Deckenplatte formschlüssig unter geringem Spiel übergreifen können, wie in Figur 6 wiedergegeben.

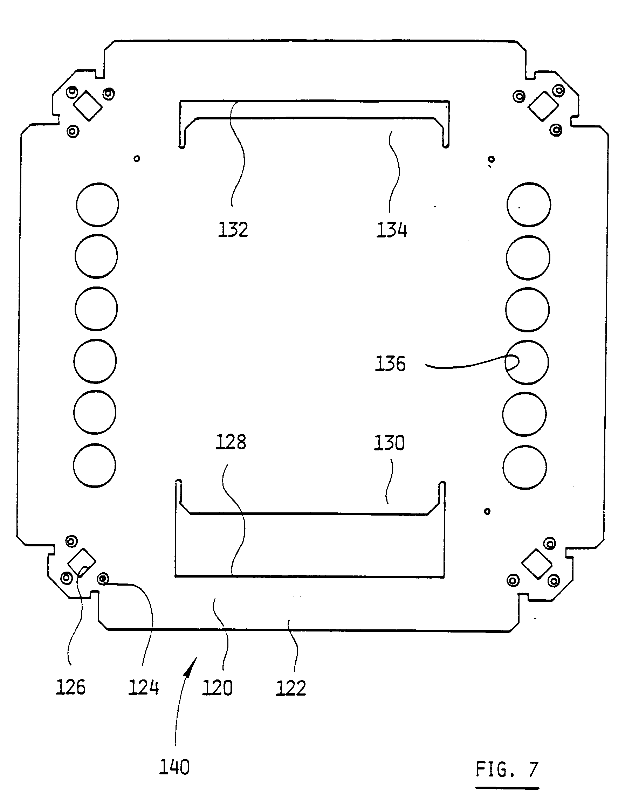

Man kann somit Bodenplatten und Deckenplatten gleichermaßen aus einem gestanzten Zuschnitt 140 herstellen, wie er in Figur 7 wiedergegeben ist. In diesem Zuschnitt werden dann, wenn aus ihm Bodenplatten gemacht werden sollen, nur noch zusätzlich die Montage-Durchbrechungen 138 vorgesehen. Wo diese in einer Deckenplatte nicht stören, kann man auch exakt den gleichen Zuschnitt für Deckenplatten und Bodenplatten verwenden. Bei diesem Zuschnitt werden dann die Seitenwände 120 gebogen, und die Unterscheidung zwischen Deckenplatten und Bodenplatten erfolgt dann nur dadurch, daß man bei einer Deckenplatte die Materiallappen 130, 134 zur gleichen Seite hin umkantet wie die Seitenwände 120 und an einer etwa um die Blechstärke weiter innen liegenden Faltlinie umkantet als bei den Bodenplatten, bei denen die Materiallappen 130, 134 auch zur von den Seitenwänden 120 abgelegenen Seite hin umgekantet werden.

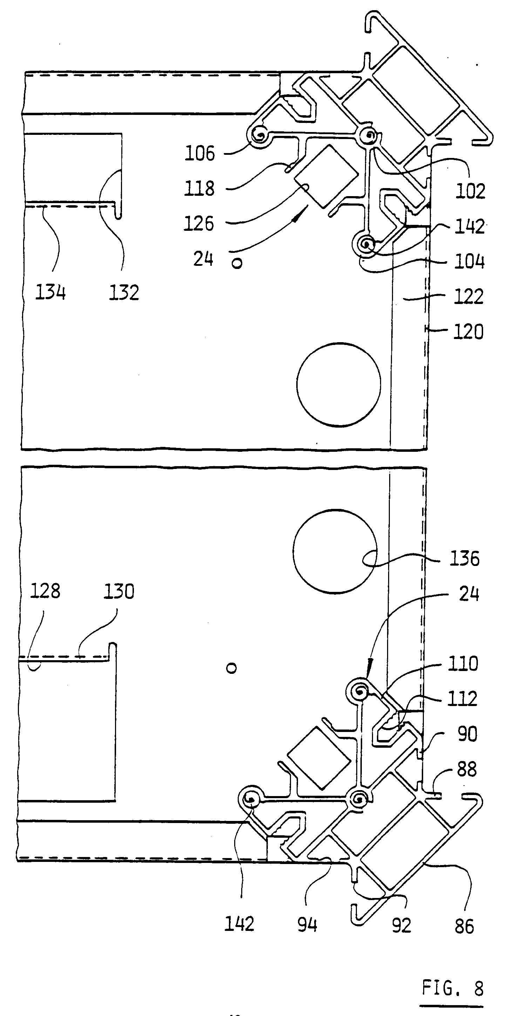

Figur 8 zeigt zwei Eckverbindungen eines Gerüstes 18 bei einer Bodenplatte 20.

In die Schraubenkanäle 102-106 sind jeweils selbstschneidende Senkkopf-Blechschrauben 142 eingedreht, deren Köpfe an der Unterseite der Bodenplatte 20 angreifen und dort in den Ansenkungen der Bohrungen 124 verschwinden. Man erkennt in Figur 8 gut die Zuordnung der Profilteile 24 zu den von Seitenwänden 120 freien Eckbereichen der Bodenplatte 20. Außerdem erkennt man gut die Ausfluchtung der Durchbrechungen 126 auf den durch die Kabelkanalwände 116, 118 vorgegebenen Kabelkanal.

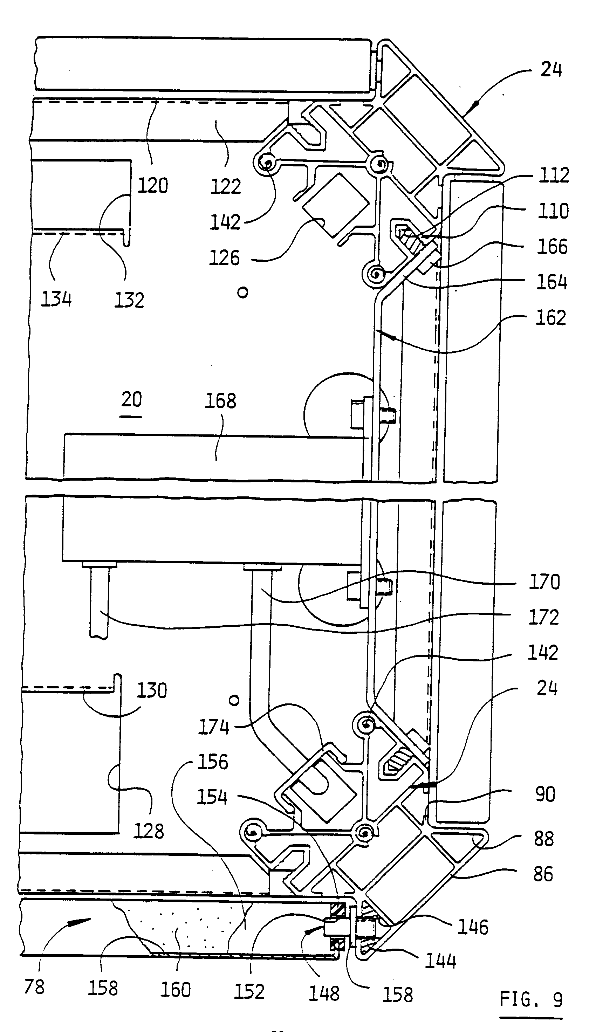

Figur 9 zeigt im unteren Bereich Einzelheiten der Anbringung der Verkleidungsplatten 78 an den Profilteilen 24.

In den hinter dem Längsschlitz 92 liegenden dreieckigen Kanal ist eine Leiste 144 mit Gewindebohrungen 146 eingeschoben. In die Gewindebohrungen 146 sind unter vertikalem Abstand zwei Haltezapfen 148 eingeschraubt, die mit einem Flanschabschnitt 150 an der Außenseite der Anschlagwand 88 abgestützt sind. Die Haltezapfen 148 laufen unter geringem Spiel in einem Bajonettschlitz 152, der einen in Figur 9 nicht gezeigten, nach hinten offenen Endabschnitt hat, so daß die Verkleidungsplatte 78 nach Anheben nach vorn vom Gerüst 18 abgenommen werden kann. Wie dargestellt ist der Bajonettschlitz 152 in einem Kunststoffteil 154 vorgesehen, welches in eine umgekantete Seitenwand 156 eines flachen Schalenkörpers 158 der Verkleidungsplatte 78 eingesetzt ist. Im Innenraum des Schalenkörpers 158 befindet sich eine Schalldämm-Matte 160.

Bei der rechts gelegenen Seitenwand des in Figur 9 gezeigten Versorgungselementes ist eine Montageplatte 162 angebracht. Diese hat unter 45° aus der Plattenebene abgebogene Endabschnitte 164, die vor den Versteifungswänden 110 liegen. Selbstschneidende Schrauben 166 sind in die Nuten 112 der Versteifungswände 110 eingedreht. Auf diese Weise ist die Montageplatte 162 leicht zugänglich in unmittelbarer Nachbarschaft der Seitenwand des Versorgungselementes angebracht.

Beim hier betrachteten Ausführungsbeispiel trägt die Montageplatte 162 eine elektrische Steuereinheit 168, die über ein Kabel 170, welches durch den vom vorderen Profilteil 124 begrenzten Kabelkanal nach unten zur Hausinstallation geführt ist, mit Energie versorgt wird und über ein im Versorgungselement verlaufendes Kabel 172 eine Last, z.B. die Elektromotoren 30 oder den Elektromotor 40 versorgt. Es versteht sich, daß man analog auch fluidische oder rein mechanische Einheiten am Gerüst 18 leicht zugänglich befestigen kann.

In Figur 9 ist am Kabelkanal des vorderen Profilteiles 24 ferner eine aus elastischem Kunststoff gespritzt, aufgerastete Abdeckleiste 174 wiedergegeben.

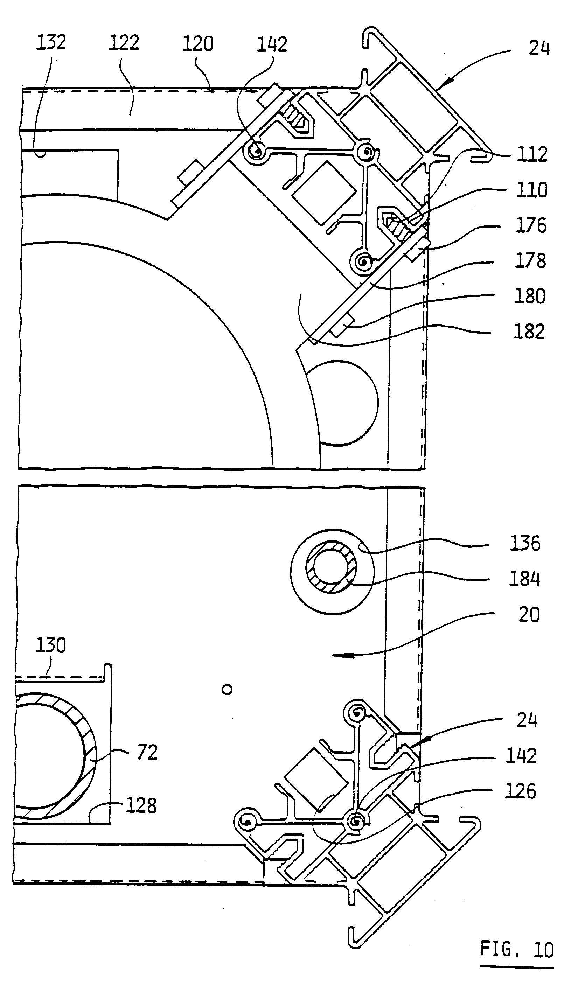

Figur 10 zeigt beim oberen Profilteil 24 eine weitere Möglichkeit der Anbringung von Zusatzeinrichtungen:

An den seitlichen Versteifungswänden 110 sind über in die Nuten 112 eingedrehte Paare übereinanderliegender selbstschneidender Schrauben 176 zwei Befestigungsplatten 178 angebracht. An deren freien Rändern ist über Gewindeschrauben 180 ein Ansatz 182 des oberen Tragringes 58 befestigt, an dem die Trockenlufteinheit 62 hängt. Eine ähnliche Befestigung ist für den unteren Tragring 60 vorgesehen.

Man erkennt, daß man eine solche Befestigung in beleibiger Höhe an einem der Profilteile 24 leicht anbringen kann, ohne daß dieses irgendwie bearbeitet werden müßte.

Wo von der Befestigung nur eine geringe Tragkraft verlangt wird, kann man auch nur eine einzige Befestigungsplatte verwenden.

Im unteren Teil von Figur 10 erkennt man in der Durchbrechung 128 die großen Durchmesser aufweisende Abluftleitung 72. Ferner ist in einer der Durchbrechungen 136 ein Schlauch 136 wiedergegeben, über den z.B. der Trockenlufteinheit 62 Kühlwasser zugeführt wird.

Die Versorgungselemente 12, 14 und 16 werden in der Fabrik mit den von ihnen getragenen Geräten bestückt. Auch alle Druckmittelleitungen und elektrischen Leitungen werden mit Ausnahme kurzer vertikaler Verbindungsleitungen, die die Versorgungselemente untereinander bzw. mit der Hausinstallation verbinden, in der Fabrik angebracht. Am Einsatzort müssen dann nur noch die Versorgungselemente 12, 14 und 16 übereinandergestellt werden und die noch fehlenden vertikalen Verbindungsleitungen zwischen den Elementen bzw. zur Hausinstallation hergestellt werden.

In Abwandlung des oben beschriebenen Ausführungsbeispieles kann man die Druckluftleitung 68, die Vakuumleitung 70 und die Abluftleitung 72 sowie die elektrischen Anschlußleitungen auch durch die Deckenplatte 22 des Versorgungselementes 16 nach oben zu entsprechenden gehäusefesten Anschlußstellen führen.

Für Anwendungen, in denen es auf Geräuschdämmung und/oder ansprechendes Äußeres der Versorgungseinheit weniger ankommt, kann man auch die Verkleidungsplatten 70 weglassen. Auch die derart abgemagerte Versorgungseinheit zeichnet sich aber durch einen übersichtlichen, einfachen und sauberen Aufbau aus.

In weiterer Abwandlung der Erfindung kann man für Versorgungseinheiten mit kleinerer Leistung die Profilteile 24 von unten nach oben durchlaufen lassen und die nun leichtere Saugmaschine 38 und einen einzigen Kolbenverdichter 26 kleiner Leistung auf Bodenplatten setzen, die an den durchgehenden Profilteilen 24 abgestützt sind, z.B. unter Verwendung von Tragwinkeln, die mit in die Nuten 112 eingreifenden selbstschneidenden Schrauben in der jeweils gewünschten Höhe an den Profilteilen 24 angebracht werden.

## Patentansprüche

1. Druckluft- und Unterdruck-Versorgungseinheit für dentale Arbeitsplätze, mit einem Verdichter (26, 28) und einer Saugmaschine (38), welche durch eine Bodenplattenanordnung getragen sind, dadurch gekennzeichnet, daß die Bodenplattenanordnung eine erste Bodenplatte (20), auf welcher der Verdichter (26, 28) steht, und eine zweite Bodenplatte (20) aufweist, auf welcher die Saugmaschine (38) steht; daß zumindest die obere der beiden Bodenplatten mit einer Durchbrechung (128) versehen ist, durch welche sich Strömungsmittelleitungen (68 bis 72) und/oder elektrische Leitungen erstrecken; daß für jede Bodenplatte (20) eine Deckenplatte (22) vorgesehen ist, die im wesentlichen die gleiche Form hat die wie Bodenplatte (20); daß jede Deckenplatte (22) mit der zugeordneten Bodenplatte (20) durch vertikale Profilteile (24) verbunden ist; und daß die so erhaltenen Elemente (12, 14, 16) übereinandergesetzt sind.

2. Versorgungseinheit nach Anspruch 1, dadurch gekennzeichnet, daß eine dritte Bodenplatte (20), die mit den ersten beiden Bodenplatten (20) fluchtet und mit einer dieser Bodenplatten durch vertikale Ständer (24) verbunden ist, einen Speicherbehälter (44) für Druckluft und/oder Unterdruck und/oder eine Trockenlufteinheit (62) trägt; und daß zumindest die oberen beiden der drei Bodenplatten (20) mit Durchbrechungen (128) versehen sind, durch welche sich Strömungsmittelleitungen (68 bis 72) und/oder elektrische Leitungen erstrecken.

3. Versorgungseinheit nach Anspruch 1 oder 2, dadurch gekennzeichnet, daß die Bodenplatten (20) identische Form haben.

4. Versorgungseinheit nach einem der Ansprüche 1 bis 3, dadurch gekennzeichnet, daß die vertikalen Ständer (24) extrudierte Profilteile aus Metall sind.

5. Versorgungseinheit nach Anspruch 4, dadurch gekennzeichnet, daß die Profilteile (24) eine Sichtwand (86) haben, die unter 45° zu Anschlagwänden (88, 90) angestellt ist, welche mit Randbereichen von plattenförmigen Verkleidungselementen (78) zusammenarbeiten.

6. Versorgungseinheit nach Anspruch 5, dadurch gekennzeichnet, daß die Verkleidungselemente (78) wannenförmige Schalenkörper (158) und in diesen angebrachte Schalldämmmatten (160) aufweisen.

7. Versorgungseinheit nach Anspruch 5 oder 6, dadurch gekennzeichnet, daß die Anschlagwände (88, 90) Längsschlitze (92, 94) aufweisen, an denen Befestigungsmittel (148; 166; 176) anbringbar sind.

8. Versorgungseinheit nach Anspruch 7, dadurch gekennzeichnet, daß die Verkleidungselemente (78) Bajonettschlitze (152) aufweisen, die mit an den Längsschlitzen (92, 94) der Anschlagwände (88, 90) angebrachten Haltezapfen (148) zusammenarbeiten.

9. Versorgungseinheit nach einem der Ansprüche 5 bis 8, dadurch gekennzeichnet, daß die Profilteile (24) von den Anschlagwänden (88, 90) nach hinten weglaufende, senkrecht auf der Sichtwandebene stehende Versteifungswände (110) aufweisen, welche in Längsrichtung verlaufende Kanäle (112) für Befestigungselemente (166; 176) aufweisen.

10. Versorgungseinheit nach einem der Ansprüche 1 bis 9, dadurch gekennzeichnet, daß die Profilteile (24) mindestens einen Schraubenkanal (102 bis 106) haben und die Enden der Profilteile (24) durch zwei Platten (20, 22) verbunden sind, die mit in die Enden der Schraubenkanäle (102 bis 106) eingreifenden Schrauben (142) an den Profilteilen (24) befestigt sind.

11. Versorgungseinheit nach Anspruch 10, dadurch gekennzeichnet, daß die Profilteile (24) drei Schraubenkanäle (102 bis 106) habe, deren Verbindungslinien ein rechtwinklig gleichschenkliges Dreieck vorgeben.

12. Versorgungseinheit nach einem der Ansprüche 1 bis 11, dadurch gekennzeichnet, daß die Profilteile (24) auf ihrer Rückseite mit einen Kabelkanal begrenzenden Kabelkanalwänden (116, 118) versehen sind und die Bodenplatten (20) zwischen diesen Kabelkanalwänden (116) liegende Durchbrechungen (126) haben.

13. Versorgungseinheit nach Anspruch 12, dadurch gekennzeichnet, daß die freien Enden (118) der Kabelkanalwände (116, 118) durch eine lösbar aufgesetzte Abdeckung (174) verschlossen sind.

14. Versorgungseinheit nach einem der Ansprüche 1 bis 13, dadurch gekennzeichnet, daß die Bodenplatten (20) und die Deckenplatten (22) Blechbiegeteile sind, welche niedere umgekantete Seitenwände (120) haben, wobei Eckbereiche der Platten von Seitenwänden freigelassen sind.

15. Versorgungseinheit nach Anspruch 14, dadurch gekennzeichnet, daß die Durchbrechungen (128) von Bodenplatten (20) und Deckenplatten (22) an einer ihrer Längskanten einen umgekanteten rechteckigen Materiallappen (130) aufweisen, wobei die Umkantung für Bodenplatten und Deckenplatten in entgegengesetzter Richtung erfolgt und die Materiallappen an Bodenplatte und Deckenplatte um etwa die Blechstärke gegeneinander versetzt sind, so daß sich bei aufeinandergesetzten Elementen (12, 14, 16) die Materiallappen der Bodenplatten formschlüssig über die Materiallappen der darunterliegenden Deckenplatten liegen.

16. Versorgungseinheit nach Anspruch 15, dadurch gekennzeichnet, daß die Bodenplatten (20) und die Deckenplatten (22) den rechteckigen Durchbrechungen (128) bezüglich der Plattenmittelebene gegenüberliegende zweite Durchbrechungen (132) aufweisen, die bei einer ihrer Längskanten gleichermaßen mit umgekanteten Materiallappen (134) versehen sind, wobei die den beiden Durchbrechungen zugeordneten Materiallappen (130, 134) gleiche Höhe haben.

17. Versorgungseinheit nach einem der Ansprüche 1 bis 16, gekennzeichnet durch eine Mehrzahl längs des Randes von Bodenplatten (20) und ggf. Deckenplatten (22) angeordneter kreisförmiger Durchbrechungen (136).

18. Versorgungseinheit nach einem der Ansprüche 2 bis 17, dadurch gekennzeichnet, daß der Speicherbehälter (44) über eine vorzugsweise vertikale Scharnieranordnung (46 bis 56) am Gerüst (18), vorzugsweise einem der vertikalen Profilteile (24) gelagert ist.

19. Versorgungseinheit nach Anspruch 18, dadurch gekennzeichnet, daß die Scharnieranordnung gesteckte Scharnierteile (46 bis 52) aufweist.

20. Versorgungseinheit nach einem der Ansprüche 1 bis 19, dadurch gekennzeichnet, daß die oberste Deckenplatte (22) einen Ventilator (74) trägt.

21. Versorgungseinheit nach Anspruch 20, dadurch gekennzeichnet, daß der Ventilator (74) durch einen Temperaturfühler (76) gesteuert ist, der vorzugsweise unter der obersten Deckenplatte (22) hängt.

22. Versorgungseinheit nach einem der Ansprüche 1 bis 21, wobei der Verdichter Kolbenverdichter (26, 28) aufweist, dadurch gekennzeichnet, daß Kurbelwellen und Motorwellen der Kolbenverdichter (26, 28) vertikal ausgerichtet sind.

23. Versorgungseinheit nach Anspruch 22, dadurch gekennzeichnet, daß der Verdichter zwei Kolbenverdichter (26, 28) aufweist, deren Zylinder symmetrisch zur Mittelachse der sie tragenden Bodenplatte (20) angeordnet sind.

## Claims

1. Unit for supplying compressed air and negative pressure for dental work places, comprising a compressor (26, 28) and a suction machine (38) which are carried by a base plate arrangement, characterised in that the base plate arrangement has a first base plate (20) on which the compressor (26, 28) is located and has a second base plate (20) on which the suction machine (38) is located; that at least the upper of the two base plates is provided with an opening (128) through which flow medium lines (68 to 72) and/or electrical lines extend; that there is provided for each base plate (20) a cover plate (22) which has substantially the same shape as the base plate (20); that each cover plate (22) is connected to the associated base plate (20) by vertical profiles (24); and that the elements (12, 14, 16) so obtained are placed one above another.

2. Supply unit according to claim 1, characterised in that a third base plate (20), which is in alignment with the first two base plates (20) and is connected to one of those base plates by vertical supports (24), carries a storage vessel (44) for compressed air and/or negative pressure and/or a dry air unit (62); and that at least the upper two of the three base plates (20) are provided with openings (128) through which flow medium lines (68 to 72) and/or electrical lines extend.

3. Supply unit according to claim 1 or 2, characterised in that the base plates (20) are of identical shape.

4. Supply unit according to any one of claims 1 to 3, characterised in that the vertical supports (24) are extruded metal profiles.

5. Supply unit according to claim 4, characterised in that the profiles (24) have a visible wall (86) arranged at 45° to stop walls (88, 90) which cooperate with edge regions of panel-shaped cladding elements (78).

6. Supply unit according to claim 5, characterised in that the cladding elements (78) have trough-shaped shell bodies (158) and sound-proofing mats (160) arranged in the latter.

7. Supply unit according to claim 5 or 6, characterised in that the stop walls (88, 90) have longitudinal slots (92, 94) to which fastening means (148; 166; 176) can be fitted.

8. Supply unit according to claim 7, characterised in that the cladding elements (78) have bayonet slots (152) which cooperate with retaining pins (148) fitted to the longitudinal slots (92, 94) of the stop walls (88, 90).

9. Supply unit according to any one of claims 5 to 8, characterised in that the profiles (24) have reinforcing walls (110) extending backwards away from the stop walls (88, 90) and arranged perpendicular to the plane of the visible wall, which reinforcing walls have channels (112) extending in the longitudinal direction for fastening elements (166; 176).

10. Supply unit according to any one of claims 1 to 9, characterised in that the profiles (24) have at least one screw channel (102 to 106) and the ends of the profiles (24) are connected by two plates (20, 22) which are fastened to the profiles (24) by screws (142) extending into the ends of the screw channels (102 to 106).

11. Supply unit according to claim 10, characterised in that the profiles (24) have three screw channels (102 to 106) the connecting lines of which form a right-angled isosceles triangle.

12. Supply unit according to any one of claims 1 to 11, characterised in that the profiles (24) are provided at their rear side with cable channel walls (116, 118) defining a cable channel, and the base plates (20) have openings (126) arranged between those cable channel walls (116).

13. Supply unit according to claim 12, characterised in that the free ends (118) of the cable channel walls (116, 118) are closed by a removable cover (174).

14. Supply unit according to any one of claims 1 to 13, characterised in that the base plates (20) and the cover plates (22) are bent sheet metal parts which have low folded-back side walls (120), wherein corner regions of the plates are left free from side walls.

15. Supply unit according to claim 14, characterised in that the openings (128) of base plates (20) and cover plates (22) have at one of their longitudinal edges a folded-back rectangular flap of material (130), the folding back being carried out in opposite directions for base plates and cover plates and the flaps of material on the base plate and the cover plate being offset from each other by approximately the thickness of the sheet metal, so that, when the elements (12, 14, 16) are placed one on top of another, the flaps of material of the base plates lie in form-fitting manner over the flaps of material of the cover plates lying beneath them.

16. Supply unit according to claim 15, characterised in that the base plates (20) and the cover plates (22) have second openings (132) lying opposite the rectangular openings (128) in relation to the middle plane of the plates, which openings (132) are provided in like manner with folded-back flaps of material (134) at one of their longitudinal edges, the flaps of material (130, 134) associated with the two openings being of the same height.

17. Supply unit according to any one of claims 1 to 16, characterised by a plurality of circular openings (136) arranged along the edge of base plates (20) and, where appropriate, cover plates (22).

18. Supply unit according to any one of claims 2 to 17, characterised in that the storage vessel (44) is mounted on the frame (18), preferably one of the vertical profiles (24), by means of a preferably vertical hinge arrangement (46 to 56).

19. Supply unit according to claim 18, characterised in that the hinge arrangement has plugged hinge parts (46 to 52).

20. Supply unit according to any one of claims 1 to 19, characterised in that the uppermost cover plate (22) carries a ventilator (74).

21. Supply unit according to claim 20, characterised in that the ventilator (74) is controlled by a temperature sensor (76) which preferably hangs below the uppermost cover plate (22).

22. Supply unit according to any one of claims 1 to 21, wherein the compressor has piston compressors (26, 28), characterised in that crankshafts and motor shafts of the piston compressors (26, 28) are oriented vertically.

23. Supply unit according to claim 22, characterised in that the compressor has two piston compressors (26, 28) the cylinders of which are arranged symmetrically to the middle axis of the base plate (20) that carries them.

## Revendications

1. Groupe d'alimentation d'air comprimé et de vide pour postes de travail dentaires, comportant un compresseur (26, 28) et un aspirateur (38) qui reposent sur une disposition de plaques de base, caractérisé en ce que la disposition de plaques de base présente une première plaque de base (20) sur laquelle est posé le compresseur (26, 28), et une seconde plaque de base (20) sur laquelle est placé l'aspirateur (38), en ce qu'au moins la plaque de base supérieure est munie d'une ouverture (128) par laquelle passent des conduites d'écoulement (68 à 72) et / ou des câbles électriques, en ce qu'une plaque de recouvrement (22) ayant, en gros, la même forme que la plaque de base (20) est prévue pour chaque plaque de base (20), en ce que chaque plaque de recouvrement (22) est reliée à la plaque de base (20) qui lui est associée par des profilés verticaux (24), et en ce que les éléments ainsi obtenus (12, 14, 16) sont superposés.

2. Groupe d'alimentation selon la revendication 1, caractérisé en ce qu'une troisième plaque de base (20), alignée avec les deux premières plaques de base (20) et reliée à l'une de ces plaques de base par des supports verticaux (24), porte un réservoir (44) pour l'air comprimé et / ou le vide, et / ou une unité d'air sec (62), et en ce qu'au moins les deux plaques de base supérieures des trois plaques de base (20) sont munies d'ouvertures (128) par lesquelles passent des conduites d'écoulement (68 à 72) et / ou des câbles électriques.

3. Groupe d'alimentation selon la revendication 1 ou 2, caractérisé en ce que les plaques de base (20) ont une forme identique.

4. Groupe d'alimentation selon l'une des revendications 1 à 3, caractérisé en ce que les supports verticaux (24) sont des profilés métalliques extrudés.

5. Groupe d'alimentation selon la revendication 4, caractérisé en ce que les profilés (24) ont une paroi de visualisation (86) disposée avec un angle de 45 ° contre les parois d'arrêt (88, 90) qui coopèrent avec des zones du bord d'éléments de revêtement (78) en forme de plaque.

6. Groupe d'alimentation selon la revendication 5, caractérisé en ce que les éléments de revêtement (78) présentent des coques (158) en forme de cuvette dans lesquelles sont logées des nappes d'insonorisation (160).

7. Groupe d'alimentation selon la revendication 5 ou 6, caractérisé en ce que les parois d'arrêt (88, 90) présentent des fentes longitudinales (92, 94) dans lesquelles peuvent être logés des moyens de fixation (148, 166, 176).

8. Groupe d'alimentation selon la revendication 7, caractérisé en ce que les éléments de revêtement (78) présentent des fentes à baïonnette (152) qui coopèrent avec des tenons de fixation (148) logés dans les fentes longitudinales (92, 94) des parois d'arrêt (88, 90).

9. Groupe d'alimentation selon l'une des revendications 5 à 8, caractérisé en ce que les profilés (24) présentent des parois de renforcement (110) partant des parois d'arrêt (88, 90) et s'étendant vers l'arrière, disposées perpendiculairement au plan de la paroi de visualisation, qui présentent des logements (112) s'étendant longitudinalement pour des éléments de fixation (166, 176).

10. Groupe d'alimentation selon l'une des revendications 1 à 9, caractérisé en ce que les profilés (24) possèdent au moins un logement à vis (102 à 106) et les extrémités des profilés (24) sont reliées par deux plaques (20, 22) qui sont fixées aux profilés (24) au moyen de vis (142) s'engrenant dans les extrémités des logements à vis (102 à 106).

11. Groupe d'alimentation selon la revendication 10, caractérisé en ce que les profilés (24) possèdent trois logements à vis (102 à 106) dont les lignes de jonction forment un triangle rectangle-isocèle.

12. Groupe d'alimentation selon l'une des revendications 1 à 11, caractérisé en ce que les profilés (24) sont munis sur leur face arrière de parois de conduites de câble (116, 118) délimitant une conduite de câble et en ce que les plaques de base (20) présentent des ouvertures (126) situées entre ces parois de conduites de câble (116).

13. Groupe d'alimentation selon la revendication 12, caractérisé en ce que les extrémités libres (118) des parois de conduites de câble (116, 118) sont fermées par un couvercle (174) posé de manière amovible.

14. Groupe d'alimentation selon l'une des revendications 1 à 13, caractérisé en ce que les plaques de base (20) et les plaques de recouvrement (22) sont des éléments métalliques cintrés ayant des parois latérales (120) basses et repliées, les zones d'angle des plaques étant exemptes de parois latérales.

15. Groupe d'alimentation selon la revendication 14, caractérisé en ce que les ouvertures (128) des plaques de base (20) et des plaques de recouvrement (22) présentent, à l'une de leurs arêtes longitudinales, une patte (130) rectangulaire repliée, la pliure de la plaque de base et celle de la plaque de recouvrement étant inversées et la patte sur la plaque de base et celle sur la plaque de recouvrement étant décalées environ de l'épaisseur de la tôle, si bien qu'en superposant les éléments (12, 14, 16), les pattes des plaques de base sont disposées avec un engagement positif au-dessus des pattes des plaques de recouvrement situées en dessous.

16. Groupe d'alimentation selon la revendication 15, caractérisé en ce que les plaques de base (20) et les plaques de recouvrement (22) présentent chacune une seconde ouverture (132) opposée à leur ouverture rectangulaire (128) par rapport au plan médian de la plaque, dont l'une des arêtes longitudinales est également munie de pattes repliées (134), les pattes (130, 134) associées aux deux ouvertures ayant la même hauteur.

17. Groupe d'alimentation selon l'une des revendications 1 à 16, caractérisé par un grand nombre d'ouvertures (136) circulaires disposées le long du bord des plaques de base (20) et, le cas échéant, des plaques de recouvrement (22).

18. Groupe d'alimentation selon l'une des revendications 2 à 17, caractérisé en ce que le réservoir (44) est fixé au cadre (18), de préférence à l'un des profilés (24) verticaux, au moyen d'une disposition de charnière (46 à 56), de préférence verticale.

19. Groupe d'alimentation selon la revendication 18, caractérisé en ce que la disposition de charnière présente des éléments de charnière (46 à 52).

20. Groupe d'alimentation selon l'une des revendications 1 à 19, caractérisé en ce que la plaque de recouvrement (22) la plus haute porte un ventilateur (74).

21. Groupe d'alimentation selon la revendication 20, caractérisé en ce que le ventilateur (74) est commandé par un capteur de température (76) qui est, de préférence, suspendu sous la plaque de recouvrement la plus haute (22).

22. Groupe d'alimentation selon l'une des revendications 1 à 21, dans lequel le compresseur présente des compresseurs à piston (26, 28), caractérisé en ce que les vilebrequins et les arbres du moteur des compresseurs à piston (26, 28) sont orientés verticalement.

23. Groupe d'alimentation selon la revendication 22, caractérisé en ce que le compresseur présente deux compresseurs à piston (26, 28) dont les cylindres sont disposés symétriquement par rapport à l'axe médian de la plaque de base (20) qui les porte.
